# EUROPEAN PATENT SPECIFICATION

(11) **EP 0 456 286 B1**
(45) Date of publication and mention of the grant of the patent: **18.12.1996**
(21) Application number: 91113823.8
(22) Date of filing: 13.03.1987
(51) Int. Cl.: E04B 2/30, F16B 13/14

(54) **Anchoring device**
Verankerungsvorrichtung
Dispositif d'ancrage

(30) Priority: 15.03.1986 GB 8606431; 20.08.1986 GB 8620208
(43) Date of publication of application: 13.11.1991
(62) Divisional of application: 87302158.8
(73) Proprietor: BAKER & FINNEMORE LIMITED, Birmingham B3 1SN (GB)
(72) Inventor: Chambers, John Thomas, Redditch, Worcestershire B98 7NP (GB)
(74) Representative: Stonehouse, Sidney William

(56) References cited:
- BE-A- 787 445
- CH-A- 457 981
- DE-A- 3 209 018
- GB-A- 1 350 749
- GB-A- 2 140 889
- US-A- 4 112 637
- US-A- 4 309 911

## Description

This invention relates to an anchoring device for providing a fixing in a wall, floor or other structure and particularly, though not exclusively, to a wall tie for connecting the inner and outer leaves of cavity walls of buildings.

Wall ties embedded in the mortar courses are incorporated during the building of brick or block cavity walls. In many older buildings the original wall ties of steel have been weakened by rusting to such an extent that they have broken or are dangerously weak. Replacement is necessary. It is possible by removing bricks to replace old wall ties by new ties similarly embedded in mortar but this is a very laborious and time consuming process.

Many proposals for fitting remedial wall ties have been made in which a circular hole is drilled through one leaf, usually the outer leaf, and partway through the other leaf, usually the inner leaf. Various forms of replacement ties to be fitted in such holes have been proposed. Some involve the use of synthetic resin to secure the tie or a nut element in at least one leaf of the wall. A delay is involved while the resin sets before the fixing of the tie can be completed as torque cannot be applied until the resin has set. Other replacement ties are of complex construction and high cost usually involving expansible portions for securing the tie in the inner and outer leaves.

In some buildings one leaf of a cavity wall is made of breeze block or similar material which is softer than brick or concrete used for the other leaf. Mechanical gripper means may not grip satisfactorily in softer materials and resin affords a better connection to the wall material.

BE-A-787445 discloses a device for securing cladding elements to a wall. It is generally cylindrical and has axial and radial passages through which bonding resin is injected to secure the device within holes in the wall and the cladding.

GB-A-1 350 749 discloses a method of securing an anchor insert in a hole in a structure. The insert comprises a metal cylinder, one end of which having a windowed portion formed by strips and slits the outer surface of which is serrated. The insert is placed in a hole, and bonding material injected into it. By driving a plug into the bore of the insert the bonding material is forced through the slits of the windowed portion into the space between the insert and the hole. The bonding material is allowed to harden thereby retaining the insert in the hole which retention is enhanced by the serrations. Driving the plug into the insert also forces the strips of the windowed portion outwards. This limits the amount of bonding material which is situated around the windowed portion or bonding site.

DE-A-3 209 018 discloses an anchoring device comprising a pin with a spreader cone, and a sleeve. A capsule of resin is stuck on the front end of the cone, the hardener for the resin formed in a ring around the cone. On driving the device into a hole, the capsule releases the resin, and the sleeve powders the hardener, the two mix, securing the device in the hole. In order for this invention to function, a destructible capsule must be in place on the end of the pin, resulting in a somewhat complicated and expensive device.

In US-A-3269251 a self-retaining insert is provided which is adapted to be fixed in a hole in a workpiece without the use of resin or other bonding material. The insert comprises a cylindrical sleeve which is internally screw-threaded to function as a nut and has L-shaped teeth which are caused to be projected radially from the sleeve to be embedded in the walls of the hole to secure the insert in the hole. The teeth are angularly spaced around the sleeve, some within the length of the sleeve and others extending from an inner end of the sleeve. They are joined at one end of the L-shapes to the body of the sleeve and have their opposite, free, ends formed into sharp-edge tips. Initially the L-shapes of the teeth are angled inwardly of the sleeve so that the tops do not protrude beyond the outside diameter of the sleeve. This allows free entry of the sleeve into the hole. A removable shaft slidable in the sleeve is driven along the sleeve to urge the teeth outwards so as to project the tips from the sleeve and embed them in the wall of the hole. Thus retention of the insert in the hole requires the mechanical action of embedding the teeth in the walls of the hole.

An object of the present invention is to provide an anchoring device which is simple and inexpensive to make and quick and easy to fit and, in its application to a remedial wall tie, is an improvement in some, at least, of these respects on replacement wall ties so far available.

From a first aspect the present invention provides an anchoring device adapted to be fitted in a hole drilled in a structure to which the device is to be secured by synthetic resin, comprising an elongate tubular body having adjacent one end a windowed portion comprising longitudinal strips separated by slots forming windows through the tubular body, the strips being bowed inwards towards a central longitudinal axis of the tubular body such that the windowed portion is bodily waisted, the internal cross-section of the tube is reduced and the windows diminish in width towards medial parts of the lengths of the strips, characterised in that the bore of the tubular body is closed by a disc near to the windowed portion and the windowed portion is between the disc and said adjacent end of the tubular body, the arrangement being such that, in use of the anchoring device, on fitting the device in the hole, substantial local clearance is left between the windowed portion and the surface of the hole to receive synthetic resin for keying with the windowed portion and in the windows to secure the device in the hole in the structure, and the disc serves to prevent flow of resin along the bore of the tubular body from the windowed portion.

From a second aspect the invention provides a method of securing an anchoring device in a hole in a structure, characterised by the steps of introducing synthetic resin into the hole and fitting into the hole an anchoring device in accordance with the foregoing first aspect of the present invention so that the windowed portion of the anchoring device is received within the hole and there is substantial local clearance between the windowed portion and the surface of the hole for the synthetic resin to key to the windowed portion and in the windows to secure the device in the hole, the disc of the device preventing flow of the resin along the bore of the tubular body away from the windowed portions as the portion is received within the hole to be secured and acting as a piston to urge the resin through the windows.

The anchoring device may be in the form of a wall tie to be fitted in aligned holes in inner and outer leaves of a cavity wall, and have one of said windowed portions at each end of the tubular body. The anchoring device may be a remedial wall tie.

The outer end of the tubular body may be provided with means for releasably connecting a testing device for testing the grip of the anchoring device in the structure on an adaptor for coupling such a testing device to the anchoring device.

Testing devices for remedial wall ties are usually provided with an internally screw-threaded socket to engage 6mm screw-threaded ends of wall ties of the rod-type. To enable the grip of wall ties according to the present invention to be tested by standard equipment, an adaptor may be provided having a 6mm screw-threaded shank and a spigot, the diameter of which fits easily into the bore of the tubular body of the wall tie. Interengaging formations may be provided on the spigot and the tubular body engageable on insertion of the head in the bore of the tubular body. For example, the spigot may be inserted axially and then turned to cause the formations to interengage. The adaptor is secured to the wall tie by the interengaging formations and the testing device is connected to the adaptor by the screw-threaded shank.

One suitable form of the interengaging formations is a bayonet joint, bayonet slots being provided at the outer end of the tubular body to receive radial pins projecting from the spigot of the adaptor.

In another example, projections extending inwardly into the bore of the tubular body are engaged by a spigot the free end of which forms a head the full diameter of which suits the bore of the tubular body. The head has gaps which allow it to pass the projections. Then by turning the adaptor in the bore of the tubular body the head is engaged behind the projections.

Anchoring devices in accordance with the first aspect of the present invention, and similar to wall ties in being able to be fixed at opposite ends, may be used to secure together structural components, for example cladding to the face of a building, by drilling aligned holes to receive the anchoring devices in both materials.

An embodiment of the invention will now be described, by way of example only, with reference to the accompanying drawings in which:
Figure 1 is a longitudinal section of an anchoring device shown in an operative condition, and
Figure 2 is an end elevation of Figure 1 in the direction of the arrow A in Figure 1;

In this embodiment of the invention an anchoring device is provided in the form of a remedial wall tie. The wall tie comprises a tubular body 5, a plunger 6, guide tubes 7, a set of gripping means 10 at an outer end of the tubular body 5 and a windowed formation 11 at the opposite, inner, end. The tubular body 5 and the guide tubes 7 are formed from sheet material rolled into a tube leaving in the tubular body 5 an axial slit 12 between the edges of the strip. A drain hole 13 is pierced through the wall of the tubular body 5 opposite the slit 12. Further drain holes 13' are pierced through the wall on opposite sides of the tubular body and evenly angularly spaced from the drain hole 13 and the axial slit 12. Close to the inner side of the drain holes 13, 13' a nylon sealing washer 14 is fitted in the bore of the tubular body 5. A lug 15 on the sealing washer 14 engages the slit 12. The sealing washer 14 has a central aperture complementary to the cross-section of the plunger 6 which is made from flat strip having inclined portions 16 formed in its narrower edges towards the outer end of the tubular body. The plunger 16 extends through and co-operates with dog plates 17, 18 of the gripping means 10 axially spaced apart on the plunger by guide plates 19, 20, 21. The dog plates 17, 18 and guide plates 19, 20, 21 are positioned at a pair of opposed openings 22 in the wall of the tubular body 5 through which the dog plates are caused to be projected transversely from the body, as shown in the drawings, by the inclined portions 16 of the plunger 6 when the plunger is driven axially along the tubular body to an operative position towards the windowed formation 11.

The plunger 6 is long enough to remain in engagement with the sealing washer 14 in a pre-operative condition in which it projects from the outer end of the tubular body.

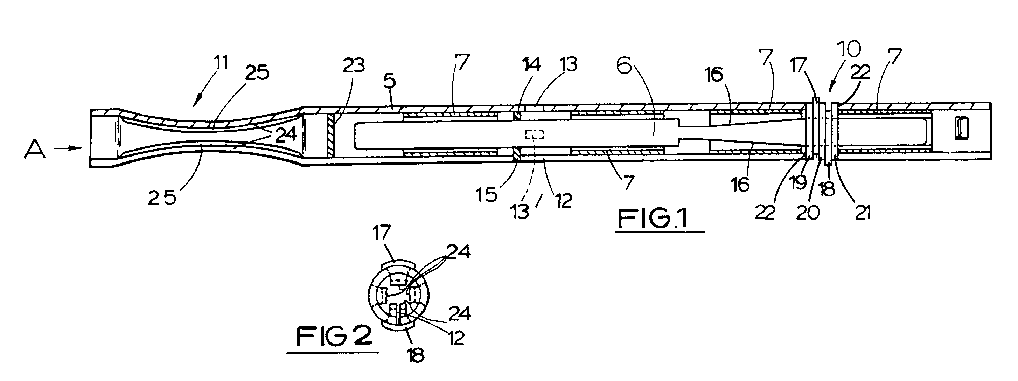

As illustrated, the guide tubes 7, for convenience in manufacture, are all of similar length and some do not occupy the full, axial dimensions between other components. To hold the guide tubes 7 and other small components in position during assembly 0-rings may be fitted around the plunger on each side of the component or sub-assembly of components of the gripping means 10 which is to be located. Beyond the inner end of the plunger in the operative condition shown in Figure 1, a nylon disc 23 closes the bore of the tubular body 5.

In so far as the wall tie includes the gripping means it is in accordance with the anchoring device claimed in our European Patent No. 0 238 265. The gripping means is operable to secure the wall tie in a hole in an outer leaf of a cavity wall. Securing the wall tie at an inner leaf of the cavity wall is by means of resin and the windowed formation, the latter fitting into a blind hole in the inner leaf.

The windowed formation 11 comprises angularly spaced, narrow, longitudinal strips 24 of the tubular body formed and separated from one another by piercing rectangular slots, forming windows 25, through the material of which the tubular body is made. The strips 24 and the windows 25 extend from near the inner end of the tubular body 5 nearly to the disc 23. The strips 24 are bowed radially inwards until their edges at their mid-points meet or nearly meet. The shape of the initially rectangular windows 25 is altered by this operation so that each window 25 is closed or becomes very narrow at the middle and widens from there into generally triangular-shaped ends. The whole inner end of the tube is given a waisted form leaving substantial local clearance between the strips 24 and the surface of the hole in the wall into which the wall tie is fitted.

Resin injected into the blind hole in the inner leaf of the wall before the wall tie is put in will, on insertion of the wall tie, flow through the windows 25 enveloping the whole of the inner end of the tubular body 5 in resin. When the resin has set, the windowed formation 11 affords a very good key between the resin and the wall tie. The disc 23 prevents the liquid resin from flowing along the bore of the tubular body 5 and acts as a piston urging the resin through the windows 25.

Instead of the resin being injected into the blind hole of the inner leaf of the wall, it may be provided in a frangible capsule an end of which is fitted into the inner end of the wall tie before insertion. The capsule projects axially from the wall tie and is fractured by being compressed between the blind end of the hole and the end of tubular body on insertion of the wall tie. Alternatively the capsule of resin may be fitted during manufacture of the wall tie into the bore of the tubular body 5 between the end of the plunger 6, which may then be shorter than illustrated in Figure 1, and the windowed formation 11, the sealing washer being perforated for the plunger to pass through to fracture the capsule.

Although the wall tie illustrated in the drawings is intended for cavity walls, its features may be used in generally similar anchoring devices for securing together structural components, with or without a gap between them, for example, for securing cladding panels to the face of a wall of a building, as by drilling a hole for the anchoring device through the cladding and part way into the wall, inserting and securing the anchoring device and plugging the exposed hole in the cladding.

## Claims

1. An anchoring device adapted to be fitted in a hole drilled in a structure to which the device is to be secured by synthetic resin, comprising an elongate tubular body (5) having adjacent one end a windowed portion (11) comprising longitudinal strips (24) separated by slots forming windows (25) through the tubular body, the strips (24) being bowed inwards towards a central longitudinal axis of the tubular body such that the windowed portion (11) is bodily waisted, the internal cross-section of the tube is reduced and the windows (25) diminish in width towards medial parts of the lengths of the strips,
characterised in that:
the bore of the tubular body (5) is closed by a disc (23) near to the windowed portion (11) and the windowed portion is between the disc (23) and said adjacent end of the tubular body, the arrangement being such that, in use of the anchoring device, on fitting the device in the hole, local clearance is left between the windowed portion (11) and the surface of the hole to receive synthetic resin for keying with the windowed portion and in the windows (25) to secure the device in the hole, and the disc serves to prevent flow of resin along the bore of the tubular body from the windowed portion.

2. An anchoring device according to claim 1 characterised in that it is in the form of a wall tie to be fitted in aligned holes in inner and outer leaves of a cavity wall and has one said windowed portion (11) at each end of the tubular body (5).

3. An anchoring device according to claim 2 characterised in that the tubular body (5) has an outer end provided with means for releasably connecting a testing device to the tubular body for testing the grip of the anchoring device in the structure, or an adaptor for coupling such a testing device to the anchoring device, the device and adaptor having interengaging formations for releasably coupling the adaptor and anchoring device together.

4. An anchoring device according to any preceding claim, characterised in that a plunger (6) is provided in, and is axially movable along, the tubular body (5) and a frangible resin capsule is located in the tubular body between the windowed portion (11) and the plunger, the plunger being operable to fracture the capsule and release the resin when the anchoring device is inserted in the hole.

5. A method of securing an anchoring device in a hole in a structure, characterised by the steps of introducing synthetic resin into the hole and fitting into the hole an anchoring device as claimed in any one of claims 1 to 3 so that the windowed portion (11) of the anchoring device is received within the hole and there is a substantial local clearance between the windowed portion and the surface of the hole for the synthetic resin to key to the windowed portion and in the windows (25) to secure the device in the hole, the disc (23) of the device preventing flow of the resin along the bore of the tubular body away from the windowed portion as the portion is received within the hole to be secured and acting as a piston to urge the resin through the windows (25).

6. A method of securing an anchoring device according to claim 5, characterised in that the resin is in a frangible capsule inserted in the hole before the anchoring device is fitted in the hole, the capsule being fractured by the tubular body (5) to release the resin for keying with the windowed portion (11) when the anchoring device is inserted in the hole.

7. A method of securing an anchoring device according to claim 5, characterised in that the resin is in a frangible capsule located in the tubular body (5) between the windowed portion (11) and a plunger (6) which is axially movable relative to the tubular body (5) to fracture the capsule and release the resin when the anchoring device is inserted in the hole.

## Patentansprüche

1. Verankerungsbauelement zum Einsetzen in ein in einen Unterbau gebohrtes Loch, in welchem das Bauelement mit Hilfe von Kunstharz zu befestigen ist, umfassend einen länglichen, rohrförmigen Körper (5), neben dessen einem Ende ein Fensterabschnitt (11) ausgebildet ist, der Längsstreifen (24) aufweist, die durch Fenster (25) bildende, den rohrförmigen Körper durchsetzende Schlitze voneinander getrennt sind, wobei die Streifen (24) zur Längsmittelachse des rohrförmigen Körpers derart nach innen bogenförmig ausgebildet sind, daß der Fensterabschnitt (11) tailliert ist, sich der Innenquerschnitt des Rohrs verringert und die Fenster (25) in ihrer Breite zur Längsmitte der Streifen hin abnehmen,
**dadurch gekennzeichnet**, daß:
die Längsöffnung des rohrförmigen Körpers (5) in der Nähe des Fensterabschnitts (11) von einer Scheibe (23) verschlossen ist und der Fensterabschnitt zwischen der Scheibe (23) und dem benachbarten Ende des rohrförmigen Körpers liegt, wobei die Ausgestaltung derart beschaffen ist, daß beim Gebrauch des Verankerungsbauelements nach dem Einsetzen des Bauelements in das Loch ein lokaler Spielraum zwischen dem Fensterabschnitt (11) und der Wand des Lochs verbleibt für die Aufnahme von Kunstharz, damit dieser sich mit dem Fensterabschnitt und innerhalb der Fenster (25) verkeilt und das Bauelement in dem Loch festlegt, wobei die Scheibe dazu dient, ein Fließen des Harzes entlang der Längsöffnung des rohrförmigen Körpers aus dem Fensterabschnitt heraus zu unterbinden.

2. Verankerungsbauelement nach Anspruch 1, **dadurch gekennzeichnet**, daß es die Form eines Wandankers hat, der in miteinander fluchtende Löcher in Innenschale und Außenschale einer Hohlraumwand einzusetzen ist und einen Fensterabschnitt (11) an jedem Ende des rohrförmigen Körpers (5) besitzt.

3. Verankerungsbauelement nach Anspruch 2, **dadurch gekennzeichnet**, daß der rohrförmige Körper (5) ein Außenende besitzt, welches mit einer Einrichtung zum lösbaren Verbinden ciner Prüfvorrichtung an dem rohrförmigen Körper aufweist, um den Halt des Verankerungsbauelements in dem Unterbau zu prüfen, oder einen Adapter aufweist, um eine solche Prüfvorrichtung an dem Verankerungsbauelement anzukoppeln, wobei das Bauelement und der Adapter ineinander eingreifende Formelemente zum lösbaren Aneinanderkoppeln des Adapters und des Verankerungsbauelements besitzen.

4. Verankerungsbauelement nach einem der vorhergehenden Ansprüche, **dadurch gekennzeichnet**, daß in dem rohrförmigen Körper (5) ein Kolben (6) in Längsrichtung axial beweglich angeordnet ist, und sich innerhalb des rohrförmigen Körpers zwischen dem Fensterabschnitt (11) und dem Kolben eine zerbrechbare Harzkapsel befindet, wobei der Kolben derart betätigbar ist, daß er die Kapsel zerbricht und das Harz freigibt, wenn das Verankerungsbauelement in das Loch eingesetzt wird.

5. Verfahren zum Befestigen eines Verankerungsbauelements in einem in einem Unterbau befindlichen Loch, **gekennzeichnet durch** die Schritte: Eingeben von Kunstharz in das Loch und Einsetzen eines Verankerungsbauelements gemäß einem der Ansprüche 1 bis 3 in das Loch derart, daß der Fensterabschnitt (11) des Verankerungsbauelements in dem Loch aufgenommen wird und es einen wesentlichen lokalen Spielraum zwischen dem Fensterabschnitt und der Wandfläche gibt, damit sich das Kunstharz mit dem Fensterabschnitt und innerhalb der Fenster (25) verkeilt und das Bauelement in dem Loch befestigt, wobei dic Scheibe (23) des Bauelements verhindert, daß das Harz entlang der Längsöffnung des rohrförmigen Körpers von dem Fensterabschnitt wegfließt, wenn der Abschnitt innerhalb des Lochs aufgcnommen ist, um befestigt zu werden, und außerdem als Kolben wirkt, der das Harz durch die Fenster (25) drückt.

6. Verfahren nach Anspruch 5, **dadurch gekennzeichnet**, daß das Harz sich in einer zerbrechbaren Kapsel befindet, die in das Loch eingesetzt wird, bevor das Verankerungsbauelement in das Loch eingesetzt wird, wobei die Kapsel von dem rohrfförmigen Körper (5) zerbrochen wird, um das Harz freizugeben, damit es sich mit dem Fensterabschnitt (11) verkeilt, wenn das Verankerungsbauelement in das Loch eingesetzt ist.

7. Verfahren nach Anspruch 5, **dadurch gekennzeichnet**, daß das Harz sich in einer zerbrechbaren Kapsel in dem rohrförmigen Körper (5) zwischen dem Fensterabschnitt (11) und einem Kolben (6) befindet, welcher relativ zu dem rohrförmigen Körper (5) axial beweglich ist, um die Kapsel zu zerbrechen und das Harz freizugeben, wenn das Verankerungsbauelement in das Loch eingesetzt wird.

## Revendications

1. Dispositif d'ancrage apte à être monté dans un trou percé dans une structure, à laquelle le dispositif doit être fixé au moyen d'une résine synthétique, comprenant un corps tubulaire allongé (5) possédant au voisinage d'une extrémité, une partie ajourée (11) comprenant des bandes longitudinales (24) séparées par des fentes formant des fenêtres (25) à travers le corps tubulaire, les bandes (24) étant recourbées vers l'intérieur en direction d'un axe longitudinal central du corps tubulaire de telle sorte que la partie ajourée (11) est réellement étranglée, la section transversale interne du tube est réduite et les fenêtres (25) ont une largeur qui diminue en direction de parties médianes des étendues en longueur des bandes,
caractérisé en ce que :
le perçage du corps tubulaire (5) est fermé par un disque (23) proche de la partie ajourée (11) et la partie ajourée est située entre le disque (23) et ladite extrémité adjacente du corps tubulaire, l'agencement étant tel que, lors de l'utilisation du dispositif d'ancrage, lors du montage du dispositif dans le trou, un jeu local subsiste entre la partie ajourée (11) et la surface du trou de manière à recevoir une résine synthétique servant à réaliser un blocage avec la partie ajourée et dans les fenêtres (25) pour la fixation du dispositif dans le trou, et le disque sert à empêcher un écoulement de la résine dans le perçage du corps tubulaire à partir de la partie ajourée.

2. Dispositif d'ancrage selon la revendication 1, caractérisé en ce qu'il se présente sous la forme d'une attache murale devant être montée dans des trous alignés dans des panneaux intérieur et extérieur d'un mur creux et possède ladite partie ajourée (11) à chaque extrémité du corps tubulaire (5).

3. Dispositif d'ancrage selon la revendication 2, caractérisé en ce que le corps tubulaire (5) possède une extrémité extérieure équipée de moyens pour raccorder de façon amovible un dispositif de test au corps tubulaire pour tester l'accrochage du dispositif d'ancrage dans la structure, ou un adaptateur pour le couplage d'un tel dispositif de test au dispositif d'ancrage, le dispositif et l'adaptateur comportant des configurations engrenant l'une dans l'autre pour réaliser l'accouplement réciproque amovible de l'adaptateur et du dispositif d'ancrage.

4. Dispositif d'ancrage selon l'une quelconque des revendications précédentes, caractérisé en ce qu'un plongeur (6) est prévu dans et est déplaçable axialement le long du corps tubulaire (5) et qu'une capsule de résine pouvant être rompue est située dans le corps tubulaire entre la partie ajourée (11) et le plongeur, le plongeur pouvant être actionné de manière à fracturer la capsule et libérer la résine lorsque le dispositif d'ancrage est inséré dans le trou.

5. Procédé pour fixer un dispositif d'ancrage dans un trou ménagé dans une structure, caractérisé par les étapes consistant à introduire une résine synthétique dans le trou et introduire dans le trou un dispositif d'ancrage tel que revendiqué selon l'une quelconque des revendications 1 à 3 de sorte que la partie ajourée (11) du dispositif d'ancrage est logée dans le trou et qu'il existe un jeu local substantiel entre la partie ajourée et la surface du trou pour que la résine synthétique se bloque sur la partie ajourée et dans les fenêtres (25) de manière à fixer le dispositif dans le trou, le disque (23) du dispositif empêchant un écoulement de la résine dans le trou du corps tubulaire à partir de la partie ajourée lorsque cette dernière est logée dans le trou pour être fixée et agissant en tant que piston pour repousser la résine à travers les fenêtres (25).

6. Procédé pour fixer un dispositif d'ancrage selon la revendication 5, caractérisé en ce que la résine est dans une capsule pouvant être rompue, insérée dans le trou avant que le dispositif d'ancrage soit monté dans le trou, la capsule étant rompue par le corps tubulaire (5), ce qui libère la résine pour son insertion dans la partie ajourée (11) lorsqu'on insère le dispositif d'ancrage dans le trou.

7. Procédé pour fixer un dispositif d'ancrage selon la revendication 5, caractérisé en ce que la résine est dans une capsule pouvant être rompue, située dans le corps tubulaire (5) entre la partie ajourée (11) et un plongeur (6), qui est déplaçable axialement par rapport au corps tubulaire (5) pour rompre la capsule et libérer la résine lorsque le dispositif d'ancrage est inséré dans le trou.
